(19) Europäisches Patentamt
European Patent Office
Office européen des brevets

(11) **EP 4 759 785 A1**

(12) **EUROPEAN PATENT APPLICATION**
published in accordance with Art. 153(4) EPC

(43) Date of publication:
**17.06.2026 Bulletin 2026/25**

(21) Application number: 24851953.0

(22) Date of filing: **09.08.2024**

(51) International Patent Classification (IPC):
*C04B 35/486* (2006.01)   *C01G 25/02* (2006.01)
*C04B 35/626* (2006.01)   *C04B 35/634* (2006.01)

(52) Cooperative Patent Classification (CPC):
C01G 25/02; C04B 35/486; C04B 35/488;
C04B 35/626; C04B 35/634

(86) International application number:
**PCT/JP2024/028639**

(87) International publication number:
**WO 2025/033536 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 JP 2023131187**

(71) Applicant: **Tosoh Corporation
Yamaguchi 746-8501 (JP)**

(72) Inventors:
• **SHIMIZU Takahiro
Shunan-shi Yamaguchi 746-8501 (JP)**
• **USHIO Yuki
Shunan-shi Yamaguchi 746-8501 (JP)**

(74) Representative: **Müller-Boré & Partner
Patentanwälte PartG mbB
Friedenheimer Brücke 21
80639 München (DE)**

(54) **GRANULAR POWDER AND PRODUCTION METHOD THEREFOR**

(57)     Provided is at least one of a granulated powder and a simple method for producing the same; with the granulated powder, a green body having high strength can be prepared by press molding without the need to particularly control a composition of an organic component of a slurry including a raw material powder that is to be granulated. A granulated powder of a ceramic, the granulated powder comprising a powder of a ceramic; and a binder, wherein the granulated powder has an infrared spectrum in which an absorbance peak intensity, per mass of the binder, of a peak top at $1730 \pm 20$ cm$^{-1}$ is 0.023 counts or greater.

Fig. 1

## Description

TECHNICAL FIELD

The present disclosure relates to a granulated powder of a ceramic and to a method for producing the same.

BACKGROUND ART

Ceramics (sintered bodies), such as zirconia (zirconium dioxide, $ZrO_2$), are produced by molding a raw material powder into a green body (green compact) and then sintering the green body (if necessary, after the green body has been calcined). A generally used method for molding a raw material powder is press molding, in which a raw material powder loaded in a mold is molded under pressure. Typically, raw material powders have a small secondary particle size of 1 $\mu$m or less and, therefore, have low flowability. Because of this, raw material powders are granulated, and the resulting granulated powders (granulation powders) having an agglomerate size of several tens of $\mu$m are subjected to press molding. The granulated powder that is used includes the raw material powder and an organic component, such as a binder, so that the flowability can be improved and that the properties of the raw material powder when it has been molded can be improved.

For example, there is a disclosure of a granulated powder including an organic component (Patent Document 1). This granulated powder is prepared, for example, by spray-drying a ceramic powder and an organic component made of an acrylic copolymer resin, a polyvinyl alcohol, a polyalkylene oxide and stearic acid. Patent Document 1 discloses that with this granulated powder, it is possible to prepare a green body having excellent releasability associated with molding. Patent Document 2 discloses that a granulated powder having a high average circularity can be prepared by controlling an amount of bubbles, viscosity, surface tension and the like of a slurry. It is also disclosed that the granulated powder of Patent Document 2 can be a raw material suitable for molding a multilayer body.

PRIOR ART DOCUMENTS

PATENT DOCUMENTS

Patent Document 1: WO2013/047413
Patent Document 2: WO2018/056331

DISCLOSURE OF INVENTION

TECHNICAL PROBLEM

Patent Document 1 discloses that a green body having high strength can be prepared from its granulated powder by using a high molding pressure. However, in the case of the granulated powder of Patent Document 1, it is necessary to use a slurry including a raw material powder having a controlled, particular composition of an organic component that includes a binder. Furthermore, studies conducted by the present inventors confirmed that green bodies prepared from the granulated powder of Patent Document 1 are susceptible to defects, such as edge chipping during handling. Patent Document 2 discloses that a circularity of granules can be controlled by adding an organic component to a slurry including a raw material powder. Thus, in the related art, the properties of granulated powders that are prepared have been controlled by particularly controlling the composition of the organic component of the slurry including a raw material powder that is to be granulated. Note that, in Patent Document 2, it is suggested that a dispersing agent be used to control the circularity of the granulated powder; however, there is no specific disclosure regarding the dispersing agent and other conditions, and, therefore, no specific method for controlling the circularity is disclosed.

An object of the present disclosure is to provide at least one of a granulated powder and a simple method for producing the granulated powder; with the granulated powder, a green body can be prepared by press molding without the need to particularly control a composition of an organic component of a slurry including a raw material powder that is to be granulated, the green body having a strength that makes the green body resistant to cracking and edge chipping during handling.

SOLUTION TO PROBLEM

In the related art, granulated powders suitable for molding have been prepared with attention being focused on the composition of the slurry, such as the raw material powder, the organic component, and the combination of the raw material powder and the organic component. In contrast, in the present disclosure, studies were conducted with attention being focused on the granulation conditions themselves, to improve the properties of granules without particularly controlling the composition of the slurry. As a result, it was discovered that by controlling the granulation conditions themselves, a granulated powder that provides a green body having higher strength can be prepared, and that consequently, the resulting green body is resistant to defects at an edge thereof.

Specifically, the present invention is as described in the claims, and a summary of the present disclosure is as follows.

[1] A granulated powder of a ceramic, the granulated powder comprising a powder of the ceramic; and a binder, wherein the granulated powder has an infrared spectrum in which an absorbance peak intensity, per mass of the binder, of a peak top at $1730 \pm 20$ cm$^{-1}$ is 0.023 counts or greater.

[2] The granulated powder according to [1], wherein the ceramic is a zirconia.

[3] The granulated powder according to [2], wherein the zirconia is a zirconia that contains a stabilizing element.

[4] The granulated powder according to [3], wherein the stabilizing element is one or more selected from the group of yttrium, magnesium, calcium, cerium and erbium.

[5] The granulated powder according to any one of [1] to [4], wherein the binder is at least one of a polyvinylpyrrolidone-based resin and an acrylic resin.

[6] The granulated powder according to any one of [1] to [5], wherein a content of the binder is 0.1 mass% or greater and 8 mass% or less.

[7] The granulated powder according to any one of [1] to [6], wherein the granulated powder has a bulk density of 1.10 g/cm$^3$ or greater.

[8] The granulated powder according to any one of [1] to [7], wherein the granulated powder has a measured density of 2.70 g/cm$^3$ or greater, where the measured density is a density after the granulated powder is subjected to press molding under a pressure of 49 MPa, and where the press molding is performed on $15 \pm 0.5$ g of the granulated powder loaded into a cylindrical mold having a diameter of 25 mm.

[9] A method for producing the granulated powder according to any one of [1] to [8], the method comprising the step of spray-drying a slurry including a solvent, the binder and the powder of the ceramic, the spray-drying being performed with a difference between an inlet gas temperature and an outlet gas temperature being 55°C or greater.

[10] The production method according to [9], wherein the inlet gas temperature is 300°C or less.

[11] A method for producing a green body, the method comprising using the granulated powder according to any one of [1] to [8].

[12] A method for producing a calcined body, the method comprising using the green body according to [11].

[13] A method for producing a sintered body, the method comprising using the green body according to [11] or the calcined body according to [12].

ADVANTAGEOUS EFFECTS OF INVENTION

The present disclosure can provide at least one of a granulated powder and a simple method for producing the granulated powder; with the granulated powder, a green body can be prepared by press molding without the need to particularly control a composition of an organic component of a slurry including a raw material powder that is to be granulated, the green body having a strength that makes the green body resistant to cracking and edge chipping during handling.

BRIEF DESCRIPTION OF DRAWINGS

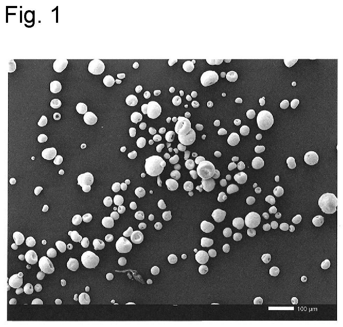

[Fig. 1] An SEM image of a granulated powder of Example 2 (the scale of the figure is 100 $\mu$m).

DESCRIPTION OF EMBODIMENTS

A granulated powder of the present disclosure will be described with reference to an example of an embodiment. Various features and parameters disclosed in this specification may be used in any combination, and the upper limits and lower limits of values disclosed in this specification may be selected in any combination.

A "composite" is a substance having a specific composition, and examples of composites include one or more selected from the group of powders, granules, green bodies, calcined bodies and sintered bodies.

A "powder" is an assembly of powder particles and is a composite having flowability. A "zirconia powder" is a powder including zirconia as a major component or is a powder consisting essentially of zirconia.

A "granulated powder" is a powder made of granular particles, and "granular particles" are particles (tertiary particles, granulated particles) resulting from slow flocculation of powder particles (in particular, at least one of primary particles and secondary particles) caused by a physical force and may include an organic component.

A "green body" is a composite having a specific shape and made of powder particles aggregated by a physical force; in particular, the green body is a composite that has not been heat-treated after the shape was given (e.g., after molding). A "zirconia green body" is a green body including zirconia as a major component or is a green body consisting essentially of zirconia. In the present embodiment, the terms "green body" and "green compact" are interchangeably used.

A "calcined body" is a composite having a specific shape and made of chemically-adhered-particles; the calcined body is a composite that has been heat-treated at a temperature less than a sintering temperature. A "zirconia calcined body" is a calcined body including zirconia as a major component or is a calcined body consisting essentially of zirconia.

A "sintered body" is a composite having a specific shape and made of crystalline particles; the sintered body is a composite that has been heat-treated at a temperature greater than or equal to a sintering temperature. A sintered body of the present embodiment may have a shape that is, for example, at least one selected from the group of spherical shapes, generally spherical shapes, elliptical shapes, disc shapes, cylindrical shapes, cubic shapes, rectangular parallelepiped shapes, polyhedral shapes and generally polyhedral shapes. The shape may be any shape for achieving predetermined purposes, including various applications. A "zirconia sintered body" is a sintered body including zirconia as a major component or is a sintered body consisting essentially of zirconia.

A "stabilizing element" is an element that serves to stabilize a crystalline phase of zirconia by dissolving into the zirconia.

A "BET specific surface area" is a value measured in accordance with JIS R 1626, with a multi-point BET method (five points) that uses nitrogen as the adsorption gas and is performed under the following conditions.

Adsorption medium: $N_2$
Adsorption temperature: -196°C
Pretreatment conditions: degassing at 250°C in an air atmosphere for 1 hour or more

The BET specific surface area can be measured with a common device (e.g., TriStar II 3020, manufactured by Shimadzu Corporation).

An "average granule size" is an average particle size of a granulated powder measured by a dry process, which is a particle size (median size) corresponding to a volume ratio of 50% in a volume particle size distribution curve measured with a common particle size distribution analyzer (trade name: MT3100II, manufactured by MicrotracBEL Corp.) under the following conditions.

Measurement sample: granulated powder
Refractive index of zirconia: 2.17
Refractive index of air: 1.333
Measurement time: 10 seconds

A "bulk density" can be determined as follows. The granulated powder is passed through a 500-$\mu$m mesh sieve and is allowed to free fall from a position at a height of 35 mm to fill a container with a volume of 100 cm$^3$. Then, the mass [g] of the 100 cm$^3$-container filled with the granulated powder is measured on a balance, thereafter, the mass of the container is subtracted from the result to determine the mass [g] of the loaded granulated powder, and the mass per volume [g/cm$^3$] is determined (volume: 100 cm$^3$).

A "powder X-ray diffraction pattern" is an XRD pattern of a composite obtained by powder X-ray diffraction (hereinafter also referred to as "XRD") measurement performed under the following conditions.

Radiation source: CuK$\alpha$ radiation ($\lambda$=0.15418 nm)
Measurement mode: continuous scanning
Scan speed: 2°/minute
Measurement range: 2$\theta$ = 26° to 33°
Acceleration voltage and current: 40 kV and 40 mA
Vertical divergence limiting slit: 10 mm
Divergence/entrance slit: 1°
Receiving slit: open
Detector: semiconductor detector (D/teX Ultra)
Filter: Ni filter
Goniometer radius: 185 mm

The XRD measurement can be performed with a common X-ray diffractometer (e.g., Ultima IV, manufactured by Rigaku Corporation). When the composite is a calcined body or a sintered body, a surface thereof may be polished to a surface roughness Ra of $\leq 0.02~\mu m$, and the XRD measurement may be performed on the surface.

Regarding XRD peaks measured by the XRD measurement, XRD peaks corresponding to various crystal planes of zirconia include XRD peaks having respective peak tops at the following $2\theta$s.

XRD peak corresponding to a monoclinic (111) plane: $2\theta = 31 \pm 0.5°$
XRD peak corresponding to a monoclinic (11-1) plane: $2\theta = 28 \pm 0.5°$
XRD peak corresponding to a tetragonal (111) plane: $2\theta = 30 \pm 0.5°$
XRD peak corresponding to a cubic (111) plane: $2\theta = 30 \pm 0.5°$

The XRD peak corresponding to the tetragonal (111) plane and the XRD peak corresponding to the cubic (111) plane overlap and are measured as one peak. Accordingly, regarding the equations above, It(111) + Ic(111) can be determined from an integrated intensity of the one XRD peak having a peak top at $2\theta = 30 \pm 0.5°$.

The integrated intensity of each of the crystal planes can be determined as follows: the XRD pattern is subjected to smoothing and background removal, and the resulting XRD pattern is subjected to profile fitting that uses a split pseudo-Voigt function. The smoothing, the background processing, and the analyses of the XRD pattern, including the calculation of the integrated intensity, can be performed with, for example, an analysis program accompanying an X-ray diffractometer (e.g., Integrated X-ray powder diffraction software PDXL Ver. 2.2, available from Rigaku Corporation).

"Pressureless sintering" is a method for sintering involving heating a sintering object (e.g., a green body or calcined body) without applying an external force thereto during sintering.

[Granulated Powder]

The present embodiment is a granulated powder of a ceramic. This granulated powder comprises a powder of the ceramic; and a binder. This granulated powder has an infrared spectrum in which an absorbance peak intensity, per mass of the binder, of a peak top at $1730 \pm 20~cm^{-1}$ is 0.023 counts or greater. By press-molding this granulated powder, which has the mentioned feature, a green body having a strength that makes the green body resistant to cracking and edge chipping (hereinafter also referred to as "chipping") during handling can be prepared.

The granulated powder of the present embodiment includes a powder of a ceramic and is formed of granular particles including a binder and powder particles of the ceramic. Regarding the granulated powder of the present embodiment, a "powder of a ceramic" refers to a ceramic that is a major component (matrix) or a ceramic that is present in the highest content in the granulated powder of the present embodiment. Preferably, the ceramic is an oxide ceramic. The oxide ceramic may be, for example, one or more selected from the group of alumina ($Al_2O_3$), zirconia ($ZrO_2$), silica ($SiO_2$), germania ($GeO_2$) and. The oxide ceramic is preferably at least one of alumina and zirconia and is more preferably zirconia.

The granulated powder of the present embodiment will be described below with reference to an example in which the ceramic is a zirconia (in which the granulated powder is a zirconia granulated powder).

Preferably, the zirconia included in the granulated powder of the present embodiment is a zirconia that contains a stabilizing element. The stabilizing element may be, for example, one or more selected from the group of yttrium (Y), calcium (Ca), magnesium (Mg), scandium (Sc), cerium (Ce) and erbium (Er); one or more selected from the group of yttrium, calcium, magnesium and cerium; or at least one of yttrium and cerium. Preferably, the stabilizing element is yttrium. The stabilizing element may be present in any content that enables a crystal phase of the zirconia to be stabilized as at least one of a cubic phase and a tetragonal phase. Preferably, the stabilizing element is present in a content that enables the stabilization of a crystal phase in which a tetragonal phase is a primary phase. Preferably, the content of the stabilizing element may be 1.5 mol% or greater, 2.0 mol% or greater or 2.8 mol% or greater and may be 8.0 mol% or less, 6.0 mol% or less or 4.2 mol% or less. More preferably, the content may be 1.5 mol% or greater and 8.0 mol% or less, 2.0 mol% or greater and 6.0 mol% or less or 2.8 mol% or greater and 4.2 mol% or less.

In the present embodiment, the content of the stabilizing element is a ratio (mol%) of moles of the stabilizing element on an oxide basis to the sum of moles of the zirconia and the moles of the stabilizing element on an oxide basis.

Preferably, the granulated powder of the present embodiment includes a powder or powders of one or more selected from the group of alumina, silica and germania (hereinafter also referred to as "additive components"), in addition to a powder of zirconia. More preferably, the granulated powder includes a powder of alumina. When zirconia and one or more additive components coexist, sintering of the zirconia at a lower temperature can be achieved. In this case, the content of the additive components may be 0 mass% or greater, greater than 0 mass% or 0.01 mass% or greater and 20 mass% or less, 10 mass% or less, 5 mass% or less or 0.1 mass% or less. While the granulated powder of the present embodiment need not include additive components, such as alumina, (i.e., the content of the additive components may be 0 mass%), the granulated powder may include alumina, and the content of the alumina may be greater than 0 mass% and 20 mass% or less, 0.01 mass% or greater and 10 mass% or less or 0.01 mass% or greater and 0.1 mass% or less. In the granulated powder of the present embodiment, the content of the additive components can be determined from a ratio

**EP 4 759 785 A1**

[mass%] of the mass of additive components on an oxide basis to the mass of the granulated powder on an oxide basis (hereinafter also referred to as the "mass of the oxides"). The contents of additive components on an oxide basis are determined based on $Al_2O_3$ for alumina, $SiO_2$ for silica and $GeO_2$ for germania.

The granulated powder of the present embodiment may include one or more pigment components. In the case where a pigment component is included, the granulated powder of the present embodiment can serve as a raw material for preparing a sintered body having any color. The pigment component may be any compound that can color ceramics and may be a transition metal oxide or a composite oxide of a transition metal. The transition metal oxide may be an oxide of a transition metal other than zirconium or hafnium or may be an oxide containing one or more selected from the group of titanium (Ti), vanadium (V), manganese (Mn), iron (Fe), cobalt (Co), nickel (Ni), copper (Cu), niobium (Nb), palladium (Pd) and tungsten (W). The composite oxide of a transition metal may be a composite oxide containing two or more selected from the group of titanium, vanadium, manganese, iron, cobalt, nickel and copper or may be a composite oxide containing two or more selected from the group of manganese, iron, cobalt and nickel and containing two or more selected from the group of aluminum (Al), zinc (Zn), germanium (Ge), gadolinium (Gd) and tin (Pb). While the pigment component included in the granulated powder of the present embodiment may be in any form, the pigment component may be a powder (or powder particles).

Regarding the type and the content of the one or more pigment components, any combination and any content thereof that can provide a desired color may be employed. While the granulated powder of the present embodiment need not include pigment components (i.e., the content of pigment components may be 0 mass%), the granulated powder may include one or more pigment components, and the content of the pigment components may be greater than 0 mass% and 10 mass% or less, 0.01 mass% or greater and 1 mass% or less or 0.01 mass% or greater and 0.5 mass% or less. In the granulated powder of the present embodiment, the content of the pigment components can be determined from a ratio [mass%] of the mass of pigment components on an oxide basis to the mass of the oxides.

The granulated powder of the present embodiment may include unavoidable impurities. An unavoidable impurity in the zirconia may be hafnia ($HfO_2$). In the present embodiment, in the case where a value based on the composition, such as contents, is to be determined, hafnia can be regarded as zirconia for calculation.

The granulated powder of the present embodiment includes a binder. Green bodies prepared by molding the granulated powder of the present embodiment have higher strength than green bodies that do not include any binder. The binder may be any binder that can be used in a powder of a ceramic used in dry press molding and which can improve the properties of the green bodies resulting from the dry press molding of a powder of a ceramic. The binder may be, for example, one or more selected from the group of polyvinyl alcohol-based resins, polyvinylpyrrolidone-based resins and acrylic resins. Preferably, the binder is at least one of a polyvinylpyrrolidone-based resin and an acrylic resin or is an acrylic-based resin, so that the resulting powder and green body can have improved storage properties and that excellent crushability can be exhibited during molding. The binder included in the granulated powder of the present embodiment may be a commercially available binder for press molding (e.g., Serander series, manufactured by HighChem Company Limited; AS-1800 and AS-2000, manufactured by Toagosei Co., Ltd.; and the like).

In the granulated powder of the present embodiment, the content of the binder may be any content that is 0.1 mass% or greater, 0.5 mass% or greater or 1 mass% or greater. When the content of the binder is within any of these ranges, the resulting green body has high strength. Furthermore, the content of the binder is preferably a content that enables the binder to sufficiently segregate on a surface of the granules and may be any content that is, for example, 8 mass% or less, 6 mass% or less, 4 mass% or less, 3.5 mass% or less or 3 mass% or less. Preferably, the content is 0.1 mass% or greater and 8 mass% or less, 0.5 mass% or greater and 6 mass% or less, 1 mass% or greater and 4 mass% or less, 1 mass% or greater and 3.5 mass% or less or 1 mass% or greater and 3 mass% or less. When the content of the binder is high, the resulting green body tends to have a high density.

In the present embodiment, the content of the binder can be determined from a ratio [mass%] of the mass of the granulated powder of the present embodiment after a heat treatment, which has been reduced, to the mass of the granulated powder, where the heat treatment is performed under the following conditions.

Heat treatment atmosphere: air atmosphere
Heat treatment temperature: 400°C
Heat treatment time: 5 hours
Heating rate: 50°C/hour

The heat treatment can be performed in a common muffle furnace (e.g., FO310, manufactured by Yamato Scientific Co., Ltd.). Before the heat treatment, the granulated powder may be pre-treated by drying the granulated powder at 110°C for 1 hour in an air atmosphere.

The granulated powder of the present embodiment may include one or more selected from the group of dispersants, lubricants, plasticizers and defoamers to the extent that the effects of the granulated powder are not impaired; or the granulated powder may not include these materials.

In a case where the granulated powder of the present embodiment is made of a yttrium-stabilized zirconia and includes a binder, alumina and pigment components, which are iron and a spinel oxide made of $AB_2O_4$, the composition of the granulated powder can be determined, for example, as follows. In the spinel oxide, A is a divalent metal element, and B is a trivalent metal element.

$$\text{Mass of oxides [g]} = Al_2O_3 + AB_2O_4 + Fe_2O_3 + Y_2O_3 + ZrO_2$$

$$\text{Amount of alumina [mass\%]} = \{Al_2O_3/(Al_2O_3 + AB_2O_4 + Fe_2O_3 + Y_2O_3 + ZrO_2)\} \times 100$$

$$\text{Amount of pigment components [mass\%]} = \{(AB_2O_4 + Fe_2O_3)/(Al_2O_3 + AB_2O_4 + Fe_2O_3 + Y_2O_3 + ZrO_2)\} \times 100$$

$$\text{Amount of iron [mass\%]} = \{Fe_2O_3/(Al_2O_3 + AB_2O_4 + Fe_2O_3 + Y_2O_3 + ZrO_2)\} \times 100$$

$$\text{Amount of spinel oxide [mass\%]} = \{AB_2O_4/(Al_2O_3 + AB_2O_4 + Fe_2O_3 + Y_2O_3 + ZrO_2)\} \times 100$$

$$\text{Amount of stabilizing element [mol\%]} = \{Y_2O_3/(Y_2O_3 + ZrO_2)\} \times 100$$

The amount of the binder can be determined in the manner described above. Because of the difference in the method of calculation, the ratio of the mass of the granulated powder of the present embodiment may be different from 100 mass% when the binder is taken into account (the binder may be handled as an external variable).

The granulated powder of the present embodiment has an infrared spectrum in which an absorbance peak intensity, per mass of the binder, of a peak top at $1730 \pm 20\ cm^{-1}$ (hereinafter also simply referred to as a "unit absorbance peak intensity") is 0.023 counts or greater. When the unit absorbance peak intensity has such a value, the resulting green body is resistant to chipping. One possible reason for this is that, in the granulated powder of the present embodiment, the state in which the binder exists is different from those of granulated powders of the related art. Specifically, it can be assumed that the absorbance peak of a peak top at $1730 \pm 20\ cm^{-1}$ in the infrared spectrum (hereinafter also referred to as a "binder peak") corresponds to a peak originating from the binder. Furthermore, it can be assumed that a high value of the binder peak with respect to the mass of the binder of the granulated powder indicates a state in which a large amount of the binder exists on a surface of the particles (granular particles) that constitute the granulated powder. Accordingly, it can be assumed that the granulated powder of the present embodiment is a granulated powder made of granular particles having a structure in which the content of the binder on the surface is higher than the content of the binder in an interior thereof. Thus, during the application of pressure, binder portions of the granular particles can easily come in close contact with one another. It can be assumed that consequently, the resulting green body is resistant to defects at an end thereof and has high strength.

The unit absorbance peak intensity may have any value that is 0.023 counts or greater. Preferably, the unit absorbance peak intensity is 0.025 counts or greater or 0.028 counts or greater. It can be assumed that the higher the unit absorbance peak intensity, the higher the ratio of the binder on the surface of the granular particles that constitute the granulated powder, and thus, the resulting green body is likely to have high strength. It can be assumed that the granular particles that constitute the granulated powder of the present embodiment are granular particles in which the amount of the binder on the surface of the granular particles is higher than the amount of the binder in the interior of the granular particles. That is, the granulated powder is made of granular particles in which the concentration of the binder decreases toward an inner portion of the granular particles from the surface of the granular particles, in other words, in which the content of the binder has a graded composition. In addition, when the unit absorbance peak intensity is high, a maximum strain, which will be described later, tends to be high, and, therefore, the resulting granulated powder is likely to have excellent moldability.

The unit absorbance peak intensity need not be excessively high and may have any value that is 0.045 counts or less, 0.042 counts or less, 0.040 counts or less or 0.035 counts or less. Preferably, the unit absorbance peak intensity of the granulated powder of the present embodiment is 0.023 counts or greater and 0.045 counts or less, 0.028 counts or greater and 0.042 counts or less or 0.028 counts or greater and 0.040 counts or less. It is preferable that the unit absorbance peak intensity be greater than 0.028 counts because, in this case, a granule compressibility (described later) of the granulated powder of the present embodiment tends to be high. More preferably, the unit absorbance peak intensity is greater than 0.028 counts and 0.040 counts or less or greater than 0.029 counts or greater and 0.036 counts or less.

In the present embodiment, the infrared spectrum is a spectrum of values measured by a single reflection ATR method performed under the following conditions. The single reflection ATR method can be performed with a common Fourier transform infrared spectrophotometer (e.g., IRXross, manufactured by Shimadzu Corporation) and a single reflection type attenuated total reflection attachment integral with a sample compartment (e.g., QATR-10, manufactured by Shimadzu Corporation).

Resolution: 4 cm$^{-1}$
Number of scans: 40
Wavenumber range: 4000 to 1500 cm$^{-1}$
Apodization function: SqrTriangle

The measurement sample to be used can be prepared by adhering the granulated powder to a diamond prism having a diameter of 2 mm.

The unit absorbance peak intensity can be determined from the obtained infrared spectrum according to the equation below.

$$D_{uni} = (D_1 - D_{ref})/W$$

In this equation, $D_{uni}$ is the unit absorbance peak intensity [count], $D_1$ is the peak intensity [count] of a peak having a peak top at 1730 $\pm$ 20 cm$^{-1}$ of the measurement sample, $D_{ref}$ is the peak intensity [count] of a peak having a peak top at 1730 $\pm$ 20 cm$^{-1}$ of a standard sample and W is the content [mass%] of the binder in the measurement sample. If there are two or more peaks having a peak top at 1730 $\pm$ 20 cm$^{-1}$, the intensity of the peak having the highest peak intensity can be used. The standard sample is a commercially available granulated powder of zirconia (product name: TZ-3YS, manufactured by Tosoh Corporation).

The granular particles that constitute the granulated powder of the present embodiment may have any shape. That is, the granulated powder of the present embodiment may be made of granular particles having one or more shapes selected from the group of irregular shapes, spherical shapes, generally spherical shapes and elliptical shapes or having one or more shapes selected from the group of spherical shapes, generally spherical shapes and elliptical shapes. Furthermore, the granulated powder of the present embodiment may include granular particles having a spherical shape, a generally spherical shape or an elliptical shape, each having depressions, and any of these shapes of the granular particles may be one that has collapsed.

The average granule size of the granulated powder of the present embodiment may be 30 $\mu$m or greater or 40 $\mu$m or greater and 80 $\mu$m or less, 60 $\mu$m or less or 50 $\mu$m or less. Preferably, the average granule size is 30 $\mu$m or greater and 80 $\mu$m or less, 40 $\mu$m or greater and 60 $\mu$m or 40 $\mu$m or greater and 50 $\mu$m or less. When the granulated powder has such an average granule size, the green body prepared by press-molding the granulated powder is likely to have a high density.

The bulk density of the granulated powder of the present embodiment is 1.10 g/cm$^3$ or greater, 1.20 g/cm$^3$ or greater or 1.25 g/cm$^3$ or greater and 1.50 g/cm$^3$ or less or 1.35 g/cm$^3$ or less. Preferably, the bulk density is 1.10 g/cm$^3$ or greater and 1.50 g/cm$^3$ or less, 1.20 g/cm$^3$ or greater and 1.35 g/cm$^3$ or less or 1.25 g/cm$^3$ or greater and 1.35 g/cm$^3$ or less.

Preferably, the granulated powder of the present embodiment has high moldability; specifically, the granulated powder may have a measured density that is a density after the granulated powder is subjected to press molding under a pressure of 49 MPa, where the press molding is performed on 15 $\pm$ 0.5 g of the granulated powder loaded into a cylindrical mold having a diameter of 25 mm (hereinafter, this density is also referred to as a "molding density"). The molding density may be 2.70 g/cm$^3$ or greater, 2.80 g/cm$^3$ or greater or 2.85 g/cm$^3$ or greater and 3.20 g/cm$^3$ or less, 3.00 g/cm$^3$ or less or 2.90 g/cm$^3$ or less. Preferably, the molding density is 2.70 g/cm$^3$ or greater and 3.20 g/cm$^3$ or less, 2.80 g/cm$^3$ or greater and 3.00 g/cm$^3$ or less or 2.85 g/cm$^3$ or greater and 2.90 g/cm$^3$ or less. In a case where the granulated powder of the present embodiment, which has the above-mentioned unit absorbance peak intensity, has a molding density of 2.80 g/cm$^3$ or greater and 2.90 g/cm$^3$ or less, it is possible to produce a green body having a strength that makes the green body resistant to defects, as compared to granulated powders that have a molding density higher than the foregoing molding density but do not have the above-mentioned unit absorbance peak intensity.

Preferably, the granulated powder of the present embodiment has a strength such that the granules do not collapse easily during handling and can be easily compressed during press molding. The strength (hereinafter also referred to as "granule strength") of the granulated powder of the present embodiment is preferably 0.1 MPa or greater, 0.4 MPa or greater or 0.5 MPa or greater and is preferably 2 MPa or less, 1.5 MPa or less, 1.2 MPa or less or 1.0 MPa or less. The granule strength of the granulated powder of the present embodiment may be, for example, 0.1 MPa or greater and 2 MPa or less, 0.1 MPa or greater and 1.2 MPa or less or 0.4 MPa or greater and 1.0 MPa or less. When the granule strength is 0.4 MPa or greater and 0.5 MPa or less, a green body resistant to defects can be easily prepared.

The granule strength is a strength at which the granulated powder collapses and is a value determined by a method in accordance with JIS R 1639-5. Specifically, the granule strength can be measured with a common device (e.g.,

MCT-510, manufactured by Shimadzu Corporation) in the following manner. Specifically, 10 of the granular particles that constitute the granulated powder are sampled; a maximum length and a minimum length of each of the granular particles are measured with a length measurement kit accompanying the measurement device, by using an objective lens magnification of 10×; and an average of the lengths is regarded as the granule size (apparent granule size). Next, an indenter is pressed against each of the granular particles under the following conditions to measure a stress-strain curve.

Indenter: FLAT 200
Test force: 30 mN
Loading rate: 30 (0.1487 mN/s)

The granule strength of each of the granular particles is determined from the inflection point of the obtained stress-strain curve according to the equation below, and an average of the granule strengths can be used as the granule strength of the granulated powder.

$$CS = 2.48 \times [\{CS_1/(\pi D_1^2) + CS_2/(\pi D_2^2) + .... + CS_{10}/(\pi D_{10}^2)\}/10]$$

In this equation, CS is the granule strength [MPa], $CS_1$ to $CS_{10}$ are each a compressive strength [mN] of a corresponding granular particle, and $D_1$ to $D_{10}$ are each the apparent granule size [μm] of a corresponding granular particle.

The granule compressibility of the granulated powder of the present embodiment is preferably 0.1% or greater, 2% or greater, 5% or greater or 6% or greater and is preferably 15% or less, 12% or less or 10% or less. The granule compressibility of the granulated powder of the present embodiment may be, for example, 0.1% or greater and 15% or less, 2% or greater and 12% or less, 5% or greater and 12% or less, 6% or greater and 12% or less or 6% or greater and 10% or less. In these cases, a tough green body can be easily prepared, that is, the resulting green body is unlikely to break.

The granule compressibility can be determined from a stress-strain curve according to the equation below; the stress-strain curve can be obtained with a measurement method similar to that for the granule strength.

Granule compressibility = displacement of the indenter at the time the granule collapses/granule size

$$C = \{(C_1/D_1 + C_2/D_2 + .... + C_{10}/D_{10})/10\} \times 100$$

In this equation, C is the granule compressibility [%], $C_1$ to $C_{10}$ are each a distance [μm] travelled by the indenter, from a zero point (initial position) to the inflection point in the stress-strain curve of a corresponding granular particle, and $D_1$ to $D_{10}$ are each the apparent granule size [μm] of a corresponding granular particle.

Preferably, the granulated powder of the present embodiment satisfies at least one of the following conditions: the granule strength is greater than 0.3 MPa; and the granule compressibility is 6% or greater. In these cases, the powder has increased ease of handling, and the resulting green body is resistant to defects. Regarding the granulated powder of the present embodiment, it is preferable that the granule strength be 0.3 MPa or greater and that the granule compressibility be 6% or greater because, in this case, crushability tends to be high. Preferably, the granule strength is 0.4 MPa or greater, and the granule compressibility is 6% or greater. More preferably, the granule strength is 0.5 MPa or greater, and the granule compressibility is 6% or greater.

[Method for Producing Granulated Powder]

A preferred method for producing the granulated powder of the present embodiment may be a method for producing a granulated powder comprising the step of spray-drying a slurry including a solvent, the binder and the powder of the ceramic, the spray-drying being performed with a difference between an inlet gas temperature and an outlet gas temperature being 55°C or greater. With this, it is possible to obtain the granulated powder of the present embodiment, from which a green body resistant to defects, such as cracking and edge chipping, can be prepared.

The step (hereinafter also referred to as a "spray drying step") of spray-drying a slurry including a solvent, the binder and the powder of the ceramic, the spray-drying being performed with a difference between an inlet gas temperature and an outlet gas temperature being 55°C or greater, is one in which a slurry including a solvent, the binder and the powder of the ceramic (hereinafter also referred to as a "raw material slurry") is provided. The binder and the powder of the ceramic that are included in the raw material slurry may each be any material that is in accordance with the purpose, that is, a binder and a powder of a ceramic of the types described above may be used.

The BET specific surface area of the powder of the ceramic included in the slurry is 5 $m^2/g$ or greater or 6 $m^2/g$ or greater and 25 $m^2/g$ or less or 20 $m^2/g$ or less. Preferably, the BET specific surface area is 5 $m^2/g$ or greater and 25 $m^2/g$ or

less or 6 m$^2$/g or greater and 20 m$^2$/g or less.

The powder of a ceramic may have any particle size such that granules can be formed by powder drying. The particle size may be, for example, 0.05 μm or greater and 1.5 μm or less or 0.1 μm or greater and 0.5 μm or less.

The solvent included in the raw material slurry may be any solvent in which the binder and the powder of a ceramic are uniformly dispersible. The solvent may be at least one of an aqueous solvent and a non-aqueous solvent, at least one of water and alcohol, or at least one of water and ethanol. Preferably, the solvent is water.

The raw material slurry may include one or more selected from the group of additive components, pigment components, dispersants, glidants, plasticizers and defoamers, as described above, in addition to the solvent, the binder and the powder of the ceramic.

In the present embodiment, the "spray drying" is an operation performed as follows: an atomized raw material slurry is contacted with a high-temperature carrier gas to rapidly evaporate the solvent, to remove the solvent from the droplets of the raw material slurry; accordingly, a granulated powder made of granular particles including a binder and a powder of a ceramic is produced. The spray drying is performed with a spray drying device (spray dryer). In the present embodiment, the spray drying can be carried out as follows: the raw material slurry is atomized and introduced into a spray drying device (spray dryer) together with a high-temperature carrier gas, and the resulting granulated powder is collected from the spray drying device together with the carrier gas.

The spray drying step performs the spray drying with the difference between the inlet gas temperature and the outlet gas temperature (hereinafter also referred to as an in-out temperature difference) being 55°C or greater. Consequently, the resulting granulated powder is made of granular particles having a structure in which the content of the binder on the surface is higher than the content of the binder in the interior. Spray drying allows instant evaporation of the solvent from the raw material slurry. Accordingly, a technique of the related art is as follows. An inlet gas temperature suitable for the removal of the solvent has been set, that is, a temperature (inlet temperature) regarding the introduction of a carrier gas into a spray drying device has been set. Note that as the obtained granulated powder is carried by the carrier gas and collected, the temperature of the carrier gas decreases as it passes through the spray drying device. Thus, the outlet gas temperature, which is a temperature (outlet temperature) regarding the discharging of the carrier gas from the spray drying device, has not been controlled with a certain purpose; for example, the outlet gas temperature has been set to, for example, a temperature freely selected in accordance with a size of the spray drying device. Regarding this, in the present embodiment, the following discoveries were made: a state of the binder changes during the time the granulated powder is carried by the carrier gas; and while the in-out temperature difference of a specific quantity or greater allows instant removal of most of the solvent, as the remaining solvent is removed, diffusion of the binder in each of the granular particles that constitute the granulated powder is promoted. It was discovered that consequently, the resulting granulated powder is made of granular particles having a structure in which the content of the binder on the surface is higher than the content of the binder in the interior. The in-out temperature difference may be any temperature that is 55°C or greater. The in-out temperature difference is preferably 60°C or greater or 80°C or greater. The upper limit of the in-out temperature difference may be, for example, 150°C or less, 120°C or less or 100°C or less. Preferably, the in-out temperature difference is 55°C or greater and 150°C or less, 60°C or greater and 120°C or less, 80°C or greater and 120°C or less or 80°C or greater and 100°C or less.

The in-out temperature difference can be controlled by adjusting the inlet gas temperature and the outlet gas temperature with a temperature control function of the spray drying device.

The inlet gas temperature may be any temperature at which the solvent can be removed from the raw material slurry. The inlet gas temperature may be 120°C or greater, 150°C or greater, greater than 150°C or 180°C or greater and 300°C or less, 250°C or less or 200°C or less. The inlet gas temperature may be, for example, 120°C or greater and 300°C or less, 120°C or greater and 250°C or less, 150°C or greater and 200°C or less, greater than 150°C and 250°C or less or 180°C or greater and 200°C or less. When the inlet gas temperature is within such a range and is suitably low (e.g., 210°C or less), the amount of solvent that instantly evaporates is limited, and the diffusion of the binder in each of the granular particles that constitute the granulated powder is further promoted as the remaining solvent is removed. Consequently, the difference in the concentration of the binder between the surface of the granular particles and the interior of the granular particles is likely to increase, and as a result, the resulting green body is likely to have high strength.

The outlet gas temperature may be any temperature that can provide the above-described in-out temperature difference. The outlet gas temperature is lower than the inlet gas temperature and is 65°C or greater, 95°C or greater, greater than 100°C or 105°C or greater and 245°C or less, 195°C or less, 145°C or less or 120°C or less. The outlet gas temperature may be, for example, 65°C or greater and 245°C or less, 65°C or greater and 195°C or less, 95°C or greater and 145°C or less, 105°C or greater and 145°C or less or 105°C or greater and 120°C or less.

The carrier gas for the spray drying may be, for example, one or more selected from the group of nitrogen, argon and air. Preferably, the carrier gas is air.

Regarding the spray drying, the method for spraying may be any method that can atomize the raw material slurry; the spray drying method may be at least one that uses an atomizer or a spray nozzle. A spray drying method that atomizes the raw material slurry with an atomizer disc is preferable because such a method makes it possible to obtain a granulated powder having a sharp particle size distribution.

[Methods for Producing Green Body, Calcined Body and Sintered Body]

The granulated powder of the present embodiment can be used as a precursor of a green body, a calcined body and a sintered body. For example, a method for producing a green body that uses the granulated powder of the present embodiment may be a method for producing a green body that includes a step of molding the granulated powder of the present embodiment.

The step of molding the granulated powder of the present embodiment (hereinafter also referred to as a "molding step") provides a green body. A method for the molding may be one or more selected from the group of known molding methods, press molding, cold isostatic pressing, injection molding, slip casting and suspension slip casting. Preferably, the method for the molding for the molding step is press molding. Cold isostatic pressing may be performed after press molding.

Conditions for the press molding may be any conditions that are in accordance with the purpose. For example, the molding may be performed at a molding pressure of 15 MPa or greater and 100 MPa or less. The press molding may hold in the state in which the molding pressure is applied. In this instance, the granulated powder of the present embodiment can be suitably crushed, and the resulting green body is likely to have high strength. In this case, a holding time may be, for example, 5 seconds or more and 60 seconds or less.

Preferably, the green body prepared from the granulated powder of the present embodiment has a strength that makes the green body resistant to chipping during handling. An index for the strength during handling may be a strength measured as follows (hereinafter also referred to as "chipping strength"). $15 \pm 0.5$ g of the granulated powder is loaded into a cylindrical mold having a diameter of 25 mm and subjected to uniaxial press molding under a pressure of 49 MPa to give a green body. This green body is used as a measurement sample and measured for the strength with a common autograph including a 10-kN load cell (e.g., AGS-10KNX STD, Class 0.5, manufactured by Shimadzu Corporation). In this manner, the likelihood of the occurrence of defects in the green body prepared from the granulated powder can be checked. The chipping strength is determined as follows. An indenter having a diameter of 1.8 mm is brought into contact with the measurement sample in a circumferential direction thereof, then, a load of 0.1 mm/min is applied, and the pressure at the maximum load is determined. The measurement is performed at five points per green body, and an average of the obtained values can be used as the chipping strength. Furthermore, the distance travelled by the indenter in this process can be determined to be used as a "maximum strain". The maximum strain is an index indicating a toughness of a green body. The higher the maximum strain, the greater the tendency for the green body not to be broken. The maximum strain of the green body prepared from the granulated powder of the present embodiment is greater than 0.05 mm. Preferably, the maximum strain is 0.06 mm or greater or 0.08 mm or greater. The upper limit of the maximum strain may be 0.25 mm or less, 0.20 mm or less, 0.16 mm or less, 0.15 mm or less or 0.12 mm or less. The maximum strain of the green body prepared from the granulated powder of the present embodiment may be, for example, greater than 0.05 mm and 0.25 mm or less, 0.06 mm or greater and 0.20 mm or less, 0.06 mm or greater and 0.15 mm or less, 0.08 mm or greater and 0.16 mm or less or 0.08 mm or greater and 0.12 mm or less.

A density of the green body prepared from the granulated powder of the present embodiment may be any measured density similar to the molding density described above.

The chipping strength of the green body prepared from the granulated powder of the present embodiment may be 11 MPa or greater, 13 MPa or greater or 14 MPa or greater and 25 MPa or less, 18 MPa or less or 15 MPa or less. The chipping strength may be, for example, 11 MPa or greater and 25 MPa or less or 13 MPa or greater and 18 MPa or less.

The green body prepared from the granulated powder of the present embodiment can be used in a method for producing a calcined body. The calcined body can be prepared by a method for producing a calcined body including a step of calcining a green body. The calcining may be any heat treatment that enables the green body to have a strength suitable for processing or any heat treatment performed at a temperature less than the temperature at which the densification of the ceramic progresses. The heat treatment may be performed at a temperature of 800°C or greater and less than 1200°C or a temperature of 1000°C or greater and 1150 or less, in an air atmosphere. A calcination time may be appropriately adjusted in accordance with the size of the green body that is to be calcined and the performance of a calcination furnace. The calcination time may be, for example, 30 minutes or more and 5 hours or less or 1 hour or more and 3 hours or less.

The green body prepared from the granulated powder of the present embodiment or the calcined body prepared from the sintered body can be used in a method for producing a sintered body. The sintered body can be prepared by a production method including a step of sintering at least one of a green body and a calcined body. The sintering may be any heat treatment performed at a temperature greater than or equal to the temperature at which the densification of the ceramic progresses. Preferably, the sintering is pressureless sintering. More preferably, the heat treatment may be performed at a temperature of 1200°C or greater and 1700°C or less or a temperature of 1400°C or greater and 1550°C or less in an air atmosphere. A sintering time may be appropriately adjusted in accordance with the size of the green body or the like that is to be sintered and the performance of a sintering furnace. The sintering time may be, for example, 10 minutes or more and 5 hours or less or 1 hour or more and 3 hours or less.

EXAMPLES

The present disclosure will be described in detail below with reference to Examples and Comparative Examples. The present disclosure is not limited to these Examples.

(BET Specific Surface Area)

The BET specific surface area was measured with a multi-point BET method (five points) in accordance with JIS R 1626, with an automatic surface area and porosimetry analyzer (instrument name: TriStar II 3020, manufactured by Shimadzu Corporation). Before the measurement, the powder sample was pre-treated by degassing performed at 250°C for a period of 1 hour or more and less than 12 hours in an air atmosphere.

Adsorption medium: $N_2$
Adsorption temperature: -196°C
Pretreatment conditions: degassing at 250°C in an air atmosphere for 1 hour or more

(Average Granule Size)

The average granule size is measured was measured by a dry process. Specifically, a volume particle size distribution curve of the granulated powder was measured with a particle size distribution analyzer (trade name: MT3100II, manufactured by MicrotracBEL Corp.) under the following conditions. The particle size (median size) corresponding to a volume ratio of 50% in the obtained cumulative volume particle size distribution curve was determined and used as the average granule size.

Measurement sample: granulated powder
Refractive index of zirconia: 2.17
Refractive index of air: 1.333
Measurement time: 10 seconds

(Bulk Density)

The granulated powder was passed through a 500-$\mu$m mesh sieve. Subsequently, the granulated powder that passed through the sieve was allowed to free fall from a position at a height of 35 mm to fill a container with a volume of 100 $cm^3$. For the free falling, the powder was used in an amount sufficient to overfill the 100-$cm^3$ container. An upper end surface of the 100-$cm^3$ container was leveled with a scraper to remove extra powder from the container. The mass of the 100-$cm^3$ container filled with the powder was measured on a balance, and then, the mass of the container was subtracted therefrom to determine the mass and the bulk density of the loaded granulated powder.

(Measurement of Infrared Spectrum)

The infrared spectrum was measured with a Fourier transform infrared spectrophotometer (instrument name: IRXross, manufactured by Shimadzu Corporation) and a single reflection type attenuated total reflection attachment integral with a sample compartment (QATR-10, manufactured by Shimadzu Corporation), under the following conditions.
Resolution: 4 $cm^{-1}$
Number of scans: 40
Wavenumber range: 4000 to 1500 $cm^{-1}$
Apodization function: SqrTriangle

The measurement sample used was one prepared by adhering the granulated powder to a diamond prism having a diameter of 2 mm.
The unit absorbance peak intensity was determined from the obtained infrared spectrum according to the equation below.

$$D_{uni} = (D_1 - D_{ref})/W$$

In this equation, $D_{uni}$ is the unit absorbance peak intensity [count], $D_1$ is the peak intensity [count] of a peak having a peak top at $1730 \pm 20$ cm$^{-1}$ of the measurement sample, $D_{ref}$ is the peak intensity [count] of a peak having a peak top at $1730 \pm 20$ cm$^{-1}$ of a standard sample (TZ-3YS, manufactured by Tosoh Corporation) and W is the content [mass%] of the binder in the measurement sample. If there were two or more peaks having a peak top at $1730 \pm 20$ cm$^{-1}$, the intensity of the peak having the highest peak intensity was used.

(Granule Strength)

The granule strength was determined by using a method in accordance with JIS R 1639-5. Specifically, 10 of the granular particles that constituted the granulated powder were sampled. The maximum length and the minimum length of each of the sampled granular particles were measured with a length measurement kit accompanying the measurement device (MCT-510, manufactured by Shimadzu Corporation), by using an objective lens magnification of $10\times$; and an average of the lengths was regarded as the granule size (apparent granule size). Next, an indenter was pressed against each of the granular particles under the following conditions to measure a stress-strain curve.
Indenter: FLAT 200
Test force: 30 mN
Loading rate: 30 (0.1487 mN/s)

The granule strength of each of the granular particles was determined from the inflection point of the obtained stress-strain curve according to the equation below, and an average of the granule strengths was used as the granule strength of the granulated powder.

$$CS = 2.48 \times [\{CS_1/(\pi D_1^2) + CS_2/(\pi D_2^2) + .... + CS_{10}/(\pi D_{10}^2)\}/10]$$

In this equation, CS is the granule strength [MPa], $CS_1$ to $CS_{10}$ are each the compressive strength [mN] of a corresponding granular particle, and $D_1$ to $D_{10}$ are each the apparent granule size [$\mu$m] of a corresponding granular particle.

(Granule Compressibility)

The granule compressibility was determined from a stress-strain curve according to the equation below; the stress-strain curve was obtained with a measurement method similar to that for the granule strength.

Granule compressibility = displacement of the indenter at the time the granule collapses/granule size

$$C = \{(C_1/D_1 + C_2/D_2 + .... + C_{10}/D_{10})/10\} \times 100$$

In this equation, C is the granule compressibility [%], $C_1$ to $C_{10}$ are each a distance [$\mu$m] travelled by the indenter, from a zero point (initial position) to the inflection point in the stress-strain curve of a corresponding granular particle, and $D_1$ to $D_{10}$ are each the apparent granule size [$\mu$m] of a corresponding granular particle.

(Chipping Strength and Maximum Strain)

An autograph including a 10-kN load cell (apparatus name: AGS-10KNX STD, Class 0.5, manufactured by Shimadzu Corporation) was used. $15 \pm 0.5$ g of the granulated powder was loaded into a cylindrical mold having a diameter of 25 mm and subjected to uniaxial press molding under a pressure of 49 MPa to prepare a green body, and this was used as a measurement sample. An indenter having a diameter of 1.8 mm was brought into contact with the measurement sample in a circumferential direction thereof, then, a load of 0.1 mm/min was applied, and the pressure at the maximum load was determined. An average of the values obtained at five points was determined and used as the chipping strength. Furthermore, the distance travelled by the indenter in this process was determined to be used as the maximum strain.

(Green Body Density)

15 ± 0.5 g of the granulated powder was loaded into a cylindrical mold having a diameter of 25 mm and subjected to uniaxial press molding under a pressure of 49 MPa to give a green body. The mass of the resulting green body sample was measured on a balance, and the volume was determined from dimensions, which were measured with a caliper. The measured density was determined from the obtained mass and volume and used as a green body density.

Example 1

A mixed slurry was prepared by mixing two slurries such that the mixed slurry had an yttrium content of 4.0 mol%. One of the slurries contained purified water and a powder of an alumina-containing yttrium-stabilized zirconia having an alumina content of 0.05 mass% and an yttrium content of 5.5 mol%. The other of the slurries contained purified water and a powder of an alumina-containing yttrium-stabilized zirconia having an alumina content of 0.05 mass% and an yttrium content of 2.5 mol%. The powder in the mixed slurry had a BET specific surface area of 10.1 $m^2$/g.

Purified water and 2.0 mass% of an acrylic binder, which was used as the binder, were mixed with the mixed slurry to prepare a dry slurry having a solids concentration (mass ratio of the powder in the mixed slurry) of 40 mass%. The dry slurry was granulated and dried in an atomizer-type spray drying device including a pin disc, by using an inlet gas temperature (inlet temperature) of 200°C and an outlet gas temperature (outlet temperature) of 105°C (an in-out temperature difference of 95°C). Thus, a granulated powder made of an yttrium-stabilized zirconia and containing an acrylic binder and alumina was prepared. This granulated powder had a binder content of 2.0 mass%, an alumina content of 0.05 mass% and an yttrium content of 4.0 mol% and was used as a granulated powder of this Example. The granulated powder of this Example had a bulk density of 1.22 g/$cm^3$, a granule strength of 0.4 MPa and a granule compressibility of 6.1%.

Comparative Example 1

A granulated powder made of an yttrium-stabilized zirconia and containing an acrylic binder and alumina was prepared in a manner similar to that of Example 1, except that the granulation and drying of the dry slurry was performed by using an inlet gas temperature of 150°C and an outlet gas temperature of 100°C (an in-out temperature difference of 50°C). This granulated powder had a binder content of 2.0 mass%, an alumina content of 0.05 mass% and an yttrium content of 4.0 mol%. The granulated powder of this Comparative Example had a granule strength of 0.3 MPa and a granule compressibility of 5.5%.

Example 2

A granulated powder made of an yttrium-stabilized zirconia and containing an acrylic binder and alumina was prepared in a manner similar to that of Example 1, except that a dry slurry was prepared by mixing the mixed slurry, an acrylic binder and purified water such that the dry slurry had an acrylic binder content of 3.4 mass%. This granulated powder had a binder content of 3.4 mass%, an alumina content of 0.05 mass% and an yttrium content of 4.0 mol% and was used as a granulated powder of this Example. The granulated powder of this Example had a bulk density of 1.28 g/$cm^3$, a granule strength of 0.3 MPa and a granule compressibility of 7.9%. Had.

Fig. 1 shows an SEM image of the granulated powder of this Example. The granulated powder of this Example included granular particles having a generally spherical shape and, in addition, included generally spherical granular particles having depressions and granular particles having a generally spherical shape that had collapsed.

Example 3

A granulated powder made of an yttrium-stabilized zirconia and containing an acrylic binder and alumina was prepared in a manner similar to that of Example 1, except that a dry slurry was prepared by mixing the mixed slurry, an acrylic binder and purified water such that the dry slurry had an acrylic binder content of 2.0 mass% and that the granulation and drying of the dry slurry was performed by using an inlet gas temperature of 220°C and an outlet gas temperature of 105°C (an in-out temperature difference of 115°C). This granulated powder had a binder content of 2.0 mass%, an alumina content of 0.05 mass% and an yttrium content of 4.0 mol% and was used as a granulated powder of this Example.

The results are shown in Table 1.

[Table 1]

| | Average Granule Size [μm] | Unit Absorbance Peak Intensity [count] | Green Body Density [g/cm$^3$] | Chipping Strength [MPa] | Maximum Strain [mm] |
|---|---|---|---|---|---|
| Example 1 | 44 | 0.032 | 2.84 | 17.4 | 0.08 |
| Example 2 | 44 | 0.035 | 2.97 | 14.3 | 0.09 |
| Example 3 | 44 | 0.029 | 2.87 | 13.4 | 0.07 |
| Comparative Example 1 | 57 | 0.021 | 2.92 | 10.6 | 0.05 |

Example 1 and Comparative Example 1 had the same composition. Nevertheless, a high chipping strength was achieved in Example 1, in which the in-out temperature difference was 95°C, in contrast to Comparative Example 1, in which the in-out temperature difference was 50°C, and thus, it was confirmed that a green body that was resistant to defects during handling was obtained in the Example. Furthermore, it was confirmed that the granulated powder of Example 1 was a granulated powder having a high crushability associated with press molding, as indicated by its high maximum strain compared to the granulated powder of Comparative Example 1. Furthermore, regarding the granulated powder of Example 2, which had a high binder content, it was confirmed that a high green body density was achieved compared to Example 1. Furthermore, regarding Example 1, which had a lower inlet gas temperature than Example 3, it was confirmed that a higher chipping strength was achieved.

Example 4

A mixed slurry was prepared by mixing a powder of an alumina-containing yttria-stabilized zirconia having an alumina content of 0.25 mass% and an yttria content of 3.0 mol% with purified water. A granulated powder made of an yttrium-stabilized zirconia and containing an acrylic binder and alumina was prepared in a manner similar to that of Example 1, except that a dry slurry having a solids concentration of 48% was prepared by mixing the mixed slurry, an acrylic binder and purified water such that the dry slurry had an acrylic binder content of 5.0 mass% and that the granulation and drying of the dry slurry was performed by using an inlet gas temperature of 185°C and an outlet gas temperature of 125°C (an in-out temperature difference of 60°C). This granulated powder had a binder content of 5.0 mass%, an alumina content of 0.25 mass% and an yttrium content of 3.0 mol% and was used as a granulated powder of this Example.
The granulated powder of this Example had an average granule size of 42 μm, a unit absorbance peak intensity of 0.038 counts, a granule strength of 0.5 MPa and a granule compressibility of 13.2%.

Example 5

A slurry was prepared by mixing a powder of an alumina-containing yttrium-stabilized zirconia having an alumina content of 0.05 mass% and an yttrium content of 3.0 mol% with purified water. The powder in the prepared slurry had a BET specific surface area of 12.8 m$^2$/g.
A granulated powder made of an yttrium-stabilized zirconia and containing an acrylic binder and alumina was prepared in a manner similar to that of Example 1, except that a dry slurry having a solids concentration of 40 mass% was prepared by mixing 2.0 mass% of an acrylic binder and purified water with the prepared slurry. This granulated powder had a binder content of 2.0 mass%, an alumina content of 0.05 mass% and an yttrium content of 3.0 mol% and was used as a granulated powder of this Example.
The granulated powder of this Example had an average granule size of 45 μm and a unit absorbance peak intensity of 0.028 counts.
The green body density and the maximum strain of the granulated powder of this Example were approximately equal to those of Example 1 and were 2.85 g/cm$^3$ and 0.07 mm, respectively.

Example 6

A slurry was prepared by mixing a powder of an alumina-containing yttrium-stabilized zirconia having an alumina content of 0.05 mass% and an yttrium content of 5.5 mol% with purified water. The powder in the prepared slurry had a BET specific surface area of 9.7 m$^2$/g.
A granulated powder made of an yttrium-stabilized zirconia and containing an acrylic binder and alumina was prepared in a manner similar to that of Example 1, except that a dry slurry having a solids concentration of 40 mass% was prepared by mixing 2.0 mass% of an acrylic binder and purified water with the prepared slurry. This granulated powder had a binder content of 2.0 mass%, an alumina content of 0.05 mass% and an yttrium content of 5.5 mol% and was used as a granulated powder of this Example.

The granulated powder of this Example had an average granule size of 43 $\mu$m, a unit absorbance peak intensity of 0.029 counts, a granule strength of 0.3 MPa and a granule compressibility of 6.5%.

The green body density and the maximum strain of the granulated powder of this Example were approximately equal to those of Example 1 and were 2.84 g/cm$^3$ and 0.07 mm, respectively.

Example 7

A slurry was prepared by mixing a powder of an alumina-containing yttrium-stabilized zirconia having an alumina content of 0.25 mass% and an yttrium content of 3.0 mol% (product name: 3YS-E, manufactured by Tosoh Corporation) and a Co-Al-Fe-Zn composite oxide, which was used as a black pigment, with purified water.

A granulated powder made of an yttrium-stabilized zirconia and containing an acrylic binder, alumina and a Co-Al-Fe-Zn composite oxide was prepared in a manner similar to that of Example 1, except that a dry slurry having a solids concentration of 48% was prepared by mixing 5.0 mass% of an acrylic binder and purified water with the prepared slurry and that the granulation and drying of the dry slurry was performed by using an inlet gas temperature of 210°C and an outlet gas temperature of 110°C (an in-out temperature difference of 100°C). This granulated powder had a binder content of 5.0 mass%, an alumina content of 0.25 mass% and an yttrium content of 3.0 mol% and was used as a granulated powder of this Example. The granulated powder of this Example had an average granule size of 42 $\mu$m, a unit absorbance peak intensity of 0.035 counts, a granule strength of 0.5 MPa and a granule compressibility of 11.5%.

Furthermore, regarding the granulated powder of this Example, which had a chipping strength of 14.9 MPa and a maximum strain of 0.15 mm, it was confirmed that the high binder content resulted in the ease of deformation.

The entire contents of the specification, claims, drawings and abstract of Japanese Patent Application No. 2023-131187, filed on August 10, 2023, are cited and incorporated herein as a disclosure of the specification of the present disclosure.

**Claims**

1. A granulated powder of a ceramic, the granulated powder comprising:

   a powder of the ceramic; and
   a binder, wherein
   the granulated powder has an infrared spectrum in which an absorbance peak intensity, per mass of the binder, of
   a peak top at 1730 $\pm$ 20 cm$^{-1}$ is 0.023 counts or greater.

2. The granulated powder according to claim 1, wherein the ceramic is a zirconia.

3. The granulated powder according to claim 2, wherein the zirconia is a zirconia that contains a stabilizing element.

4. The granulated powder according to claim 3, wherein the stabilizing element is one or more selected from the group of yttrium, magnesium, calcium, cerium and erbium.

5. The granulated powder according to any one of claims 1 to 4, wherein the binder is at least one of a polyvinylpyrrolidone-based resin and an acrylic resin.

6. The granulated powder according to any one of claims 1 to 5, wherein a content of the binder is 0.1 mass% or greater and 8 mass% or less.

7. The granulated powder according to any one of claims 1 to 6, wherein the granulated powder has a bulk density of 1.10 g/cm$^3$ or greater.

8. The granulated powder according to any one of claims 1 to 7, wherein the granulated powder has a measured density of 2.70 g/cm$^3$ or greater, where the measured density is a density after the granulated powder is subjected to press molding under a pressure of 49 MPa, and where the press molding is performed on 15 $\pm$ 0.5 g of the granulated powder loaded into a cylindrical mold having a diameter of 25 mm.

9. A method for producing the granulated powder according to any one of claims 1 to 8, the method comprising the step of spray-drying a slurry including a solvent, the binder and the powder of the ceramic, the spray-drying being performed with a difference between an inlet gas temperature and an outlet gas temperature being 55°C or greater.

10. The method according to claim 9, wherein the inlet gas temperature is 300°C or less.

11. A method for producing a green body, the method comprising using the granulated powder according to any one of claims 1 to 8.

12. A method for producing a calcined body, the method comprising using the green body according to claim 11.

13. A method for producing a sintered body, the method comprising using the green body according to claim 11 or the calcined body according to claim 12.

Fig. 1

## INTERNATIONAL SEARCH REPORT

| International application No. |
|---|
| **PCT/JP2024/028639** |

**A. CLASSIFICATION OF SUBJECT MATTER**

*C04B 35/486*(2006.01)i; *C01G 25/02*(2006.01)i; *C04B 35/626*(2006.01)i; *C04B 35/634*(2006.01)i
FI: C04B35/486; C04B35/626 950; C04B35/634 240; C04B35/634 440; C01G25/02

According to International Patent Classification (IPC) or to both national classification and IPC

**B. FIELDS SEARCHED**

Minimum documentation searched (classification system followed by classification symbols)
C04B35/486; C01G25/02; C04B35/626; C04B35/634

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-515665 A (SAINT-GOBAIN CENTRE DE RECHERCHES ET D'ETUDES EUROPEEN) 09 May 2013 (2013-05-09)<br>paragraphs [0105], [0116]-[0163] | 1-13 |
| X | JP 2013-515666 A (SAINT-GOBAIN CENTRE DE RECHERCHES ET D'ETUDES EUROPEEN) 09 May 2013 (2013-05-09)<br>paragraphs [0100], [0121]-[0159], fig. 1 | 1-13 |
| A | JP 2013-515664 A (SAINT-GOBAIN CENTRE DE RECHERCHES ET D'ETUDES EUROPEEN) 09 May 2013 (2013-05-09)<br>entire text | 1-13 |
| A | WO 2023/145766 A1 (TOSOH CORPORATION) 03 August 2023 (2023-08-03)<br>entire text, all drawings | 1-13 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 September 2024** | **24 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/028639**

| Patent document cited in search report | | | Publication date (day/month/year) | Patent family member(s) | | | Publication date (day/month/year) |
|---|---|---|---|---|---|---|---|
| JP | 2013-515665 | A | 09 May 2013 | US paragraphs [0125], [0137]-[0190] | 2012/0328879 | A1 | |
| | | | | WO | 2011/077380 | A2 | |
| | | | | EP | 2516353 | A2 | |
| | | | | FR | 2954767 | A1 | |
| | | | | CN | 102686537 | A | |
| JP | 2013-515666 | A | 09 May 2013 | US paragraphs [0117], [0129]-[0186], fig.1 | 2012/0326361 | A1 | |
| | | | | WO | 2011/077381 | A1 | |
| | | | | EP | 2516351 | A1 | |
| | | | | FR | 2954761 | A1 | |
| | | | | CN | 102803181 | A | |
| JP | 2013-515664 | A | 09 May 2013 | US whole document | 2012/0282469 | A1 | |
| | | | | WO | 2011/077379 | A1 | |
| | | | | EP | 2516352 | A1 | |
| | | | | FR | 2954766 | A1 | |
| | | | | CN | 102695689 | A | |
| | | | | KR | 10-2012-0116966 | A | |
| WO | 2023/145766 | A1 | 03 August 2023 | JP | 2023-109721 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013047413 A
- WO 2018056331 A

- JP 2023131187 A